# EUROPÄISCHE PATENTANMELDUNG

(11) **EP 1 310 764 A2**
(43) Veröffentlichungstag der Anmeldung: **14.05.2003**
(21) Anmeldenummer: 02023423.3
(22) Anmeldetag: 19.10.2002
(51) Int. Cl.: G01C 15/00, G01S 17/89

(54) **Einrichtung zur Aufnahme eines Objektraumes**

(30) Priorität: 09.11.2001 AT 17702001
(71) Anmelder: Riegl Laser Measurement Systems Gmbh, 3580 Horn (AT)
(72) Erfinder: Riegl, Johannes, Dr., 3754 Trabenreith 35 (AT); Reichert, Rainer, 3580 Horn (AT); Ullrich, Andreas, Dr., 3003 Gablitz (AT)
(74) Vertreter: Révy von Belvárd, Peter

(57) **Zusammenfassung**

Eine Einrichtung zur Aufnahme eines Objektraumes weist einen Laser-Entfernungsmesser und eine Scan-Einrichtung zur Abtastung des Objektraumes auf. Es ist ein passiver, opto-elektronischer Empfänger (17) mit einer Scan-Einrichtung (8, 1b) vorgesehen, durch welche Scan-Einrichtungen der Objektraum durch den Entfernungsmesser und den passiven Empfänger (17) synchron und phasengleich abtastbar ist und jedem Bildelement ein Raumwinkel (α, ϕ) zugeordnet ist. Als passiver Empfänger ist ein Array (17) vorgesehen, und der Bildwinkel eines Einzelelementes des Arrays entspricht vorzugsweise dem Öffnungswinkel des Laserstrahles (12a). Ein Speicher (32) weist pro Bildelement eine Zelle auf, wobei gleichzeitig mit jeder Entfernungsmessung die einzelnen Elemente (17') des Arrays (17) auslesbar und die Signale derselben in Zellen des Speichers (32) speicherbar sind und mit jeder Entfernungsmessung die Zuordnung der Elemente des Arrays (17) und der Speicherzellen (32) um eine Teilung verschiebbar ist, so daß sich die aus den jeweiligen Raumwinkeln (α, ϕ) empfangenen jeweils identische Signale während aufeinanderfolgenden Messungen in den einzelnen Zellen aufaddieren.

## Beschreibung

Die Erfindung bezieht sich auf eine Einrichtung zur Aufnahme eines Objektraumes mit einer opto-elektronischen Entfernungsmeßeinrichtung nach einem Signal-Laufzeitverfahren mit einer Sendeeinrichtung zum Aussenden von optischen Signalen, insbesondere denen eines Lasers, und einer Empfangseinrichtung zum Empfangen von optischen Signalen, insbesondere von Laserstrahlung, die von im Zielraum befindlichen Objekten reflektiert wird und mit einer Scan-Einrichtung zur Ablenkung der optischen Achsen von Sende- und Empfangseinrichtung in zwei, vorzugsweise orthogonale, Richtungen. Diese Einrichtung umfaßt ferner eine Auswerteeinrichtung, die aus der Laufzeit bzw. der Phasenlage des ausgesandten optischen Signals Entfernungswerte ermittelt.

Solche Einrichtungen liefern sogenannte Entfernungsbilder des Objektraumes, auch als Punktewolken bezeichnet. Eine mögliche Art der Visualisierung der Daten ist durch Falschfarbenbilder gegeben, wobei bestimmten Entfernungsbereichen definierte Farben zugeordnet sind. Trotz solcher Maßnahmen ist die Interpretation solcher Bilder vielfach sehr schwierig. Dies trifft vor allem bei der Aufnahme von Bauwerken zu, da viele Flächen in sich stark strukturiert sind, diese Strukturen sich aber nicht oder nur geringfügig aus der Fläche abheben, so daß sie im Entfernungsbild nicht oder nur sehr schwach kenntlich sind. Dies ist vor allem dann störend, wenn aus mehreren solcher Aufnahmen ein 3-D-Computer-Modell des Objektes generiert wird, da die Dateien keinerlei Informationen bezüglich der Strukturierung der Flächen enthalten. Ähnliche Probleme ergeben sich beim Einsatz solcher Scanner für die Vermessungsarbeiten nach Verkehrsunfällen: während die beteiligten Fahrzeuge und die Fahrbahnbegrenzungen sowie die Position von Verkehrszeichen im allgemeinen gut wiedergegeben werden, ist es nicht möglich, Bremsspuren oder Markierungen auf der Fahrbahn wiederzugeben, mit welchen Beamte die Position von beteiligten Fahrzeugen oder von Unfallopfern festgehalten haben. Diese Spuren bzw. Markierungen sind aber für die Dokumentation des Unfallgeschehens von essentieller Bedeutung.

Um diese Probleme zu lösen, hat man schon vorgeschlagen, beim Abtasten einer Szene mit einem Entfernungsmesser, diese synchron und in Phase auch mit einem opto-elektronischen Empfänger für elektromagnetische Strahlung abzutasten. In der US-A-5,528,354 wurde nämlich ein Laserstrahl auf ein Objekt gerichtet und das reflektierte Laserlicht einerseits für den Laser-Entfernungsmesser und anderseits als aktive Szenenbeleuchtung für den Bildteil benutzt. Gerade aber angesichts des engen Wellenbereiches von Laserlicht bleiben verschiedene Objekte und ihre Eigenschaften unsichtbar bzw. nicht reproduzierbar, so daß damit das Problem lediglich verschoben wurde.

Man hat auch schon vorgeschlagen, gleichzeitig mit dem Abscannen der Szene mit dem Entfernungsmesser, diese synchron und phasengleich auch mit einem opto-elektonischen Empfänger für elektromagnetische Strahlung, insbesondere für sichtbares Licht, abzutasten, wobei diesem Empfänger eine Optik vorgeschaltet ist, die den Bildwinkel des Empfängers in etwa dem Öffnungswinkel des Sendestrahles der Entfernungsmeßeinrichtung anpaßt. Aus den entsprechenden Signalen werden Bildelemente ermittelt, wobei jedem Bildelement ein Raumwinkel zugeordnet ist. (vgl. hierzu WO 99/46 614). Bei dem oben genannten Empfänger kann es sich um einen Farbempfänger, einen monochromen Empfänger (SW) oder einen Infrarot-Empfänger handeln. Das Ergebnis solcher Aufnahmen sind Entfernungsbilder oder sehr wirklichkeitsnahe 3-D-Computer-Modelle, die alle Details und Zeichnungen der verschiedenen Flächen zeigen, so daß die Interpretation derselben relativ einfach ist und sich eventuelle zusätzliche Vermessungsarbeiten etwa bei der Dokumentation von Verkehrsunfällen erübrigen.

Beim Einsatz solcher Systeme ergeben sich dann Schwierigkeiten, wenn das Objekt nur unzureichend ausgeleuchtet ist, wie dies bei der Aufnahme der Innenräume großer Gebäude, z.B. von Kirchen, Hallen oder auch bei der Aufnahme von Kavernen, Tunnels und Höhlen im allgemeinen der Fall ist. Da die Apertur des optischen Systems aus konstruktiven Gründen begrenzt ist und die Zeit für einen kompletten Scan-Zyklus nicht beliebig vergrößert werden kann, mußte in kritischen Fällen der Objektraum mit Scheinwerfern ausgeleuchtet werden, was naturgemäß mit einem beträchtlichen Aufwand verbunden ist.

Um diese Schwierigkeit zu mindern, wurde schon vorgeschlagen, den Objektraum mit einem scharf gebündelten Lichtstrahl bzw. Lichtfächer synchron mit der Scan-Einrichtung abzutasten. (vgl. das Österreichische Patent Nr. 409 195; Patentanmeldung A-592 / 2000).

Das oben beschriebene Problem wird insofern weiter verschärft, als die Anwender solcher Scanner darin interessiert sind, die Auflösung derselben zu erhöhen, um immer mehr Details in einem Entfernungsbild-Bild oder einem 3-D- Modell darstellen zu können. Begrenzt wird die Auflösung solcher Systeme durch die Divergenz des Laser-Sende-Strahles. Die Divergenz des Sendestrahles beträgt bei Geräten gemäß dem Stand der Technik ca. 3 mrad. Der Einsatz moderner Laser ermöglicht aber die Realisierung von Öffnungswinkel von ca. 0,3 mrad und liefern damit die Basis für hochauflösende Scanner-Systeme. Bei Systemen, die neben dem Entfernungsbild durch einen passiven Sensor ein paralleles Farb- oder SW-Bild liefern, ergibt sich zwangsläufig die Forderung auch das letztere mit der gleichen Auflösung zu erzeugen. Eine Reduktion des Bildwinkels des passiven Sensors ist aber bei den gegebenen Konstruktionen nur durch eine Verkleinerung der lichtempfindlichen Fläche des Sensors möglich, was zu einer deutlichen Reduktion der Empfindlichkeit desselben führt.

Durch die vorliegende Erfindung wird zur Lösung des oben angeführten. Problems ein grundsätzlich anderer Lösungsansatz angegeben, mit welchem die Lichtstärke des passiven Aufnahmesystems der Scan-Einrichtung drastisch verbessert werden kann. Dies erfolgt dadurch, daß als Empfänger für die Bildelemente ein ein- oder zweidimensionales Array vorgesehen ist und die Brennweite der dem Array vorgeschalteten Optik so gewählt ist, daß in an sich bekannter Weise der Bildwinkel eines Einzelelementes des Arrays im wesentlichen dem Öffnungswinkel des Sendestrahles der Entfernungsmeßeinrichtung entspricht und das Array entsprechend den Ablenkrichtungen der Scan-Einrichtung ausgerichtet ist und der Ablenkwinkel der Scan-Einrichtung zwischen zwei aufeinanderfolgenden Messungen, vorzugsweise der Teilung des Arrays entspricht, femer mit einem Speicher, der pro Bildelement mindestens eine Zelle aufweist, wobei im wesentlichen gleichzeitig mit jeder Entfernungs-Einzelmessung die einzelnen Elemente des Arrays auslesbar und die Signale derselben in Zellen des Speichers speicherbar sind, die den Elementen des Bildes des Objektraumes zugeordnet sind und mit jeder Entfernungs-Einzelmessung die Zuordnung der Elemente des Arrays und der Zellen des Speichers um eine Teilung verschiebbar ist, so daß sich die aus den jeweiligen Raumwinkeln empfangenen, durch die Verschiebung jeweils identische Helligkeits- bzw. Farb-Signale während aufeinanderfolgenden Messungen in den einzelnen Zellen aufaddieren. Durch diesen Lösungsansatz wird die effektive Belichtungszeit eines einzelnen Elementes des Speichers etwa um die Anzahl der Bildelemente des Arrays erhöht und damit die Empfindlichkeit verbessert, ohne aber die räumliche Auflösung negativ zu beeinflussen.

Denn beim Scannen wird das Array zwischen zwei Entfernungsmessungen bevorzugt jeweils um ein einzelnes Bildelement verschoben. Das heißt, daß diejenige Information, die zuvor ein bestimmtes erstes Photoelement des Arrays erhielt, nun auf ein benachbartes Element übertragen wird. Nimmt man die Information des Nachbarelementes und überträgt sie im Speicher auf diejenige Zelle, welche zuvor dieselbe Information vom ersten Photoelement speicherte, so verstärkt sich natürlich die Empfindlichkeit des Systems.

Zusätzliche Vorteile ergeben sich, wenn gemäß einem weiteren Merkmal der Erfindung die Scaneinrichtung für den Empfänger für elektromagnetische Strahlung in an sich bekannter Weise ident ist mit der der Entfernungsmeßeinrichtung und daß im Strahlengang desselben ein optischer Strahlenteiler vorgesehen ist, der einen Teil der einfallenden Strahlung dem Empfänger zuleitet.

In einer Alternative zu der oben angeführten Lösung umfaßt die Scan-Einrichtung der Entfernungsmeßeinrichtung ein Prisma mit mindestens vier verspiegelten Prismenflächen, wobei die optischen Achsen der Entfernungmeßeinrichtung und des Empfängers für die elektromagnetische Strahlung von verschiedenen, vorzugsweise benachbarten, Prismenflächen ablenkbar sind.

Bei der oben angeführte Lösung oder bei Systemen mit zwei parallelen Scan-Einrichtungen weisen die optischen Achsen des Entfernungsmessers und der passiven Abtast-Einrichtung einen Abstand voneinander auf. Besonders im Nahbereich kommt es dadurch zu einem Versatz der beiden, durch die oben genannten Systeme erzeugten Bilder, zu einer sogenannten Parallaxe. Zur Kompensation dieser Parallaxe zwischen der Entfernungsmeßeinrichtung und dem Empfänger für die elektromagnetische Strahlung sind erfindungsgemäß die Zuordnungen zwischen den einzelnen lichtelektrischen Elementen des Arrays und den Zellen der Speichers entsprechend den gemessenen, zugehörigen Entfernungswerten veränderbar.

In einer Alternative ist zur Kompensation einer allfälligen Parallaxe zwischen der Entfernungsmeßeinrichtung und dem Empfänger für die elektromagnetische Strahlung, bei der Nachbearbeitung von Entfernungs- und Helligkeits- bzw. Farbbild die Zuordnung der Elemente der beiden Bilder entsprechend den gemessenen, zugehörigen Entfernungswerten veränderbar.

Vorteilhaft sind bei Verwendung eines 2-dimensionalen Arrays nach vollständiger Abtastung einer Zeile, die in den Zellen des Arrays gespeicherten Signale in die benachbarte Zeile verschiebbar und auf eventuell dort bereits gespeicherte Signale aufaddierbar.

Weitere Merkmale der Erfindung ergeben sich aus der nachfolgenden Beschreibung einiger Ausführungsbeispiele und unter Bezugnahme auf die Zeichnung.
- Fig. 1: zeigt schematisch eine Anlage zur Aufnahme eines Objektraumes unter Verwendung der erfindungsgemäßen Einrichtung;
- Fig. 2.: zeigt schematisch ein Detail der Einrichtung;
- Fig. 3: stellt ein Bild des Objektraumes mit den einzelnen Bildelementen dar, wobei verschiedene Varianten von Arrays angedeutet sind;
- Fig. 4: zeigt ebenfalls schematisch eine Variante zu der in Fig. 2 gezeigten Lösung;
- Fig. 5: stellt ein Blockschaltbild der erfindungsgemäßen Einrichtung dar; und
- Fig. 6: veranschaulicht schematisch den Vorgang des Abspeichems und Zuordnens von Bildsignalen in den Pixelspeicher der Fig. 5.

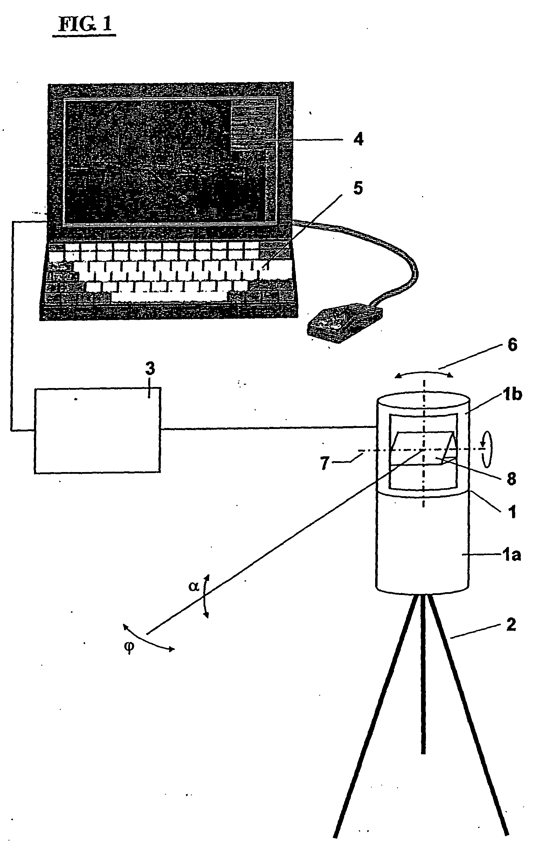

Fig. 1 zeigt eine Anlage unter Verwendung der erfindungsgemäßen Einrichtung. Die Anlage umfaßt den eigentlichen Meßkopf 1, der auf einem Stativ 2 angeordnet ist. Dieser Meßkopf 1 sendet und empfängt laser signale mittels eines Senders und eines ersten Empfängers sowie auf passive Weise das von der Szene abgestrahlte Licht (das entweder natürliches Licht ist undloder Licht einer außerhalb des Meßkopfes befindlichen Lichtquelle, beispielsweise auchmit einer Wellenlänge, die den unsichtbaren Spektrlbereich benutzt, um etwa Nebel besser zu durchdringen), wie später noch ausgeführt wird. Somit erzeugt der Meßkopfes 1 auf Grund der empfangenen Lichtsignale elektrische Signale, welche einem Steuergerät 3 zugeleitet werden. Das Steuergerät umfaßt eine Zeitintervallmeßeinheit, mit welcher die Laufzeit der Impulse ("Time of flight") gemessen wird, die aber auch durch eine Phasenverschiebung des Empfangssignales gegenüber dem gesendeten Signal bestimmt werden kann. Die Zeitintervallmeßeinheit ist mehrkanalig bzw. mehrzielfähig und ist daher in der Lage, bei Eintreffen mehrerer Echoimpulse diese zeitlich aufzulösen. In dem Steuergerät 3 werden aus der Laufzeit der Impulse Entfernungswerte berechnet. Das Steuergerät 3 enthält ferner einen (später an Hand der Fig. 5 im einzelnen beschriebenen) Signalprozessor enthält, welcher die vom Meßkopf 1 stammenden Signale verarbeitet und einem Monitor 4 eines Computers 5 zuführt, auf welchem sie in Form eines Entfernungsbildes (d.h. eines Bildes, welches außer der an sich 2-dimensionalen Bildinformation auch noch den zugehörigen Entfernungswert besitzt und in diesem Sinne ein dreidimensionales Bild ergibt), z.B. in Falschfarbendarstellung, wiedergegeben werden können. Gegebenenfalls ist das Steuergerät 3 in den Meßkopf 1 integriert.

Selbstverständlich gibt es auch andere Möglichkeiten, die Entfernungswerte in einem Bild des Monitors 4 darzustellen. Beispielsweise können eingeblendete Ziffern und/oder Linien anzeigen, wo die 5-Metergrenze, die 4-Metergrenze usw. gemessen wurde. Die Art der Bilddarstellung kann über den Computer 5 eingegeben werden, der das Steuergerät 3 entsprechend ansteuert. Das Steuergerät 3 steuert andererseits auch den Meßkopf 1 mit den Ablenkeinheiten und der Entfernungsmeß-Einheit an, wie unten noch im einzelnen erläutert wird.

Der Meßkopf 1 selbst ist bei der vorliegenden Ausführungsform zweiteilig und umfaßt einen ersten stationären Teil 1a der fix am Stativ 2 befestigt ist. Am Meßkopfunterteil 1a ist der Oberteil 1 b um meine vertikale Achse (siehe Pfeil 6) drehbar bzw. schwenkbar gelagert. Durch einen in Fig. 1 nicht dargestellten Antriebsmotor wird der Oberteil um eine vertikale Achse in eine oszillierende Schwenkbewegung entsprechend den Pfeilen 6 versetzt.

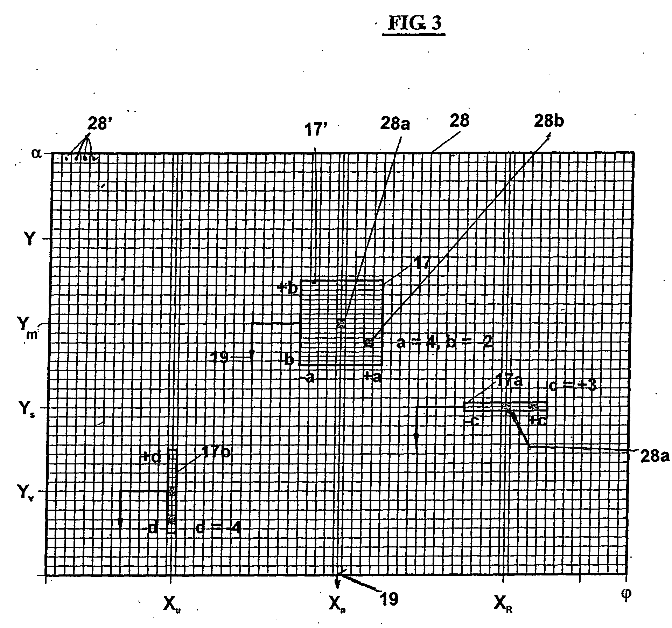

Der Meßkopfoberteil 1 b enthält als Scan-einrichtung ein mit hoher Geschwindigkeit um eine horizontale Achse 7 umlaufendes 3-seitiges Spiegelprisma 8, das die Strahlen des Entfernungsmeß-Systems um eine horizontale Achse um einen Winkel α ablenkt. Durch diese Einrichtung wird daher der Objektraum mit einem vertikalen Fächer von ca. 80° zeilenweise abgetastet. Durch Verschwenken des Meßkopf-Oberteiles 1b um einen Winkel ϕ um eine vertikale Achse überstreicht dieser Fächer das gesamte Objektfeld und nimmt damit ein komplettes Entfernungsbild auf. Zu jedem Scan- bzw. Bild-Element 28' (Fig. 3) des Raumes, das durch die beiden Ablenkwinkel α und ϕ definiert ist, gehört ein Entfernungswert. Dieser zu jedem Scan-Element gehörige Datensatz (d.h. Bild-Daten+ Entfernungswerte) wird zur weiteren Verarbeitung in einem Speicher abgelegt, wie unten an Hand der Fig. 5 erläutert wird.

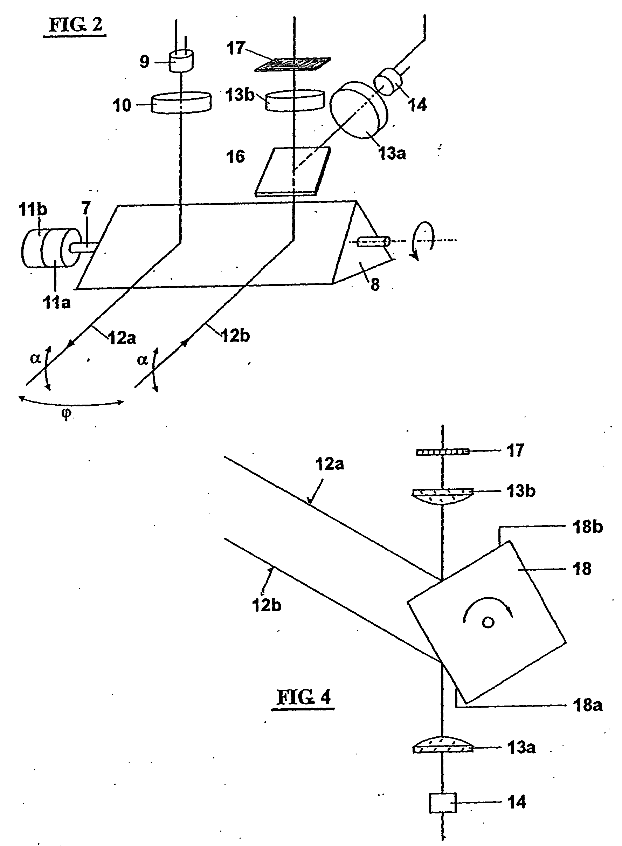

In Fig. 2 sind Details des Meßkopfoberteiles 1b dargestellt. Durch den (eine aktive Beleuchtungsquelle innerhalb des Gerätes bildenden) Laser 9 an sich beliebiger Art, beispielsweise einem GaAS-Laser oder einem gepumpten Laser, werden extrem kurze IR-Impulse in einem scharf gebündelten Strahl 12a ausgesendet. Diese werden durch das rotierendes Spiegelprisma 8 abgelenkt und tasten mit einem vertikalen Fächer den Objektraum ab. Mit 10 ist eine dem Laser vorgesetzte Kollimationsoptik bezeichnet, die hier nur symbolisch als Einzellinse dargestellt ist. 11a ist der Antriebsmotor des Spiegelprismas 8, 11b ein Winkeldecoder, der die jeweilige Winkelstellung des Prismas 8 an die Steuerung der Anlage zurückmeldet. Ein ähnlicher Winkelmesser ist dem Oberteil 1b des Messkopfes zugeordnet, um den horizontalen Ablenkwinkel ϕ zu erfassen.

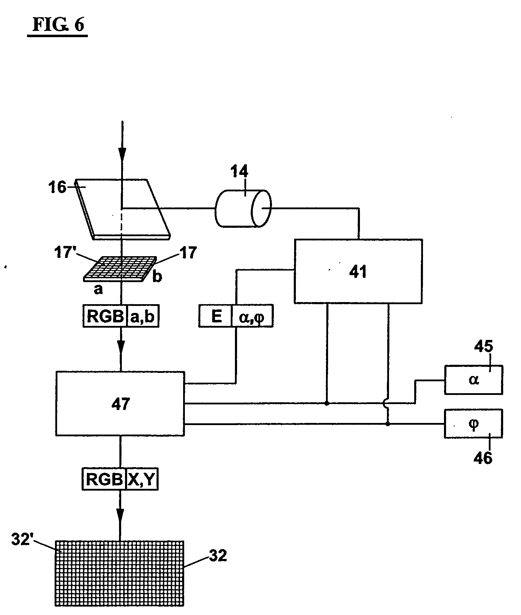

Der einfallende, von einem Objekt des Objektraumes reflektierte Strahl 12b wird an der Spiegelfläche des rotierenden Prismas 8 reflektiert. Ein teildurchlässiger Spiegel 16a mit einem dichroitischen Belag reflektiert Strahlung im nahen IR-Bereich und läßt das sichtbare Licht im wesentlichen ungeschwächt passieren. Die Laserstrahlung des Entfernungsmessers, die von den Zielen im Objektraum reflektiert worden ist, wird daher zum überwiegenden Teil abgelenkt. Ein Objektiv 13a konzentriert die Strahlung auf eine Avalanche-Diode 14. Der sichtbare Anteil der einfallenden Strahlung, der auf Grund der natürlichen Beleuchtung aus dem Objektraum abgestrahlt wird, passiert den Teilungsspiegel im wesentlichen ungeschwächt und wird durch ein Objektiv 13b auf ein Photoelemente-Array 17 (vergrößert dargestellt!) konzentriert. Dieses 2-dimensionale Array weist eine Vielzahl von Photoelementen auf, die in Zeilen angeordnet sind. Die Brennweite des Objektivs 13b ist so ausgelegt, daß der Bildwinkel der einzelnen Photoelementen der Divergenz des Laserstrahles 12a des Entfernungsmessers entspricht. In dem vorliegenden Beispiel ist der Öffnungswinkel des Laserstrahles ca. 0,3 mrad. Das Array hat 128 x 128 Pixel bzw. lichtelektrische Wandler (17' in Fig. 3 und 6), mit einer Größe der einzelnen Elementen von ca. 8µ.

Das Array ist mit Ausnahme der Ausführung nach Fig. 6 nur helligkeitsempfindlich, es können aber auch farbgebende Arrays eingesetzt werden, bei welchen ein Pixel aus drei Einzelelementen aufgebaut ist, die durch vorgesetzte Farbfilter für die drei Grundfarben sensibilisiert sind. Das bedeutet, wie in der Videotechnik bekannt, daß entweder drei Arrays jeweils für die Farben magenta, gelb und cyan (RGB) mit entsprechenden Strahlenteilern vorgesehen sind oder für Intensität, Farbton und Sättigung (IHS-System) oder jeder Reihe von Wandlern eines einzigen Arrays jeweils ein Farbstreifen eines Farbstreifenfilters vorangesetzt ist, wie auch die unterschiedliche Farbempfindlichkeit entweder durch Filter oder durch besondere Ausführung der Wandlerelemente erzielt werden kann.

Besonders aus Fig. 2 ist ersichtlich, daß das sichtbare Licht aus dem Objektraum denselben Weg nimmt, wie die reflektierten Laserimpulse, d.h. es trifft auf denselben Flächenbereich des Spiegelprismas. Dies ist der Grund, warum der Strahlenteiler 16 erforderlich ist. Es wäre natürlich ebenso möglich, getrennte Strahlenwege für die unterschiedlichen Strahlen vorzusehen, beispielsweise je ein Prisma für die beiden Strahlen unterschiedlicher Wellenlänge (oder ein einziges Prisma, aber jeweils mit einem gesonderten Spiegelflächenbereich für jeweils einen Strahl) und/oder für den gesendeten Strahl 12a und den empfangenen Strahl 12b. In einem Falle mit zwei (oder drei) Prismen wäre jedoch eine Synchronisation der Motoren für die Prismen erforderlich, weshalb diese Lösung nicht bevorzugt ist. Anderseits würde dabei der Strahlenteiler 16 entfallen.

Der Bildwinkel der Empfangsdiode 14 kann deutlich größer sein als der Öffnungswinkel des Laserstrahles 12a. Da die Diode 14 nur für den IR-Bereich sensibilisiert ist und zur Auswertung nur kurze Impulse herangezogen werden, bleibt der Bildwinkel der Diode 14 auf den Meßwinkel des Entfernungsmessers ohne Einfluß. Deshalb ist die Verwendung von gepulstem Laserlicht (wobei die Zeit bis zur Rückkehr des reflektierten Lichtes gezählt wird) bevorzugt. Die vorliegende Erfindung ist jedoch nicht auf gepulstes Laserlicht beschränkt. Denn die Laufzeit, z.B. bei einem Dauerstrich-Laser, läßt sich auch durch die Phasenverschiebung zwischen gesendetem und empfangenen Strahl messen. In diesem Sinne soll der Begriff "Laufzeit" im allgemeinsten Sinne verstanden werden.

Zur Abtastung des Objektraumes in horizontaler Richtung ist der Meßkopfoberteil 1b gegenüber dem ortsfesten Meßkopfunterteil 1a durch einen nicht dargestellten Antriebsmotor um eine vertikale Achse schwenkbar (Winkel ϕ in Fig. 2). Koaxial zum Antriebsmotor ist auch hier ein (ebenfalls nicht dargestellter ) Winkeldecoder (oder integral mit dem Motor ausgebildet) vorgesehen, der den jeweiligen Schwenkwinkel ϕ an die Steuerung meldet. Durch die beiden Winkel α und ϕ werden die Koordinaten der Meßpunkte bzw. Bildelemente (28' in Fig. 3) im Bildfeld definiert.

An Hand von Fig. 3 wird das Prinzip der neuen Einrichtung näher erläutert. Das durch die Scan-Einrichtung abgetastete Bildfeld ist mit 28 bezeichnet. In vertikaler Richtung (α) wird das Feld durch das rotierende Spiegelprisma 8 abgescannt, in horizontaler Richtung (ϕ) durch Verschwenken des Oberteiles 1b des Meßkopfes. Es versteht sich, daß an Stelle eines Prismas auch andere bekannte Abtasteinrichtungen verwendet werden können, wie etwa ein Kippspiegel oder eine Bildröhre (elektronische Abtastung, welche zu synchronisieren wäre). Das Bild besteht aus einer Vielzahl von Bild-Elementen 28', den sogenannten Pixel, die jeweils einem unterschiedlichen Winkel der so kombinierten Scan-Einrichtung 1b, 8 entspricht, d.h. einem Winkel ϕ für die Drehung des Meßkopf-Oberteiles 1b um die vertikale Achse (Fig. 1) und einem Winkel α für die Drehung des Prismas 8 um seine horizontale Achse.

Im Bildfeld ist das Array 17 angedeutet, das in vertikaler Richtung (Pfeil 19) über das Bildfeld streicht. Nachdem ein vertikaler Streifen abgetastet worden ist, verdreht sich der Meßkopf 1b um eine Pixelbreite (z.B. durch einen Schrittmotor) und es wird der nächste Streifen von oben nach unten abgetastet. Die vorliegende Erfindung ist aber nicht auf diese schrittweise Abtastung eingeschränkt. Denn von Video-Recordern ist es bekannt, entlang einer geneigten Linie in der Vertikalen abzutasten, während in horizontaler Richtung die Fortbewegung kontinuierlich erfolgt.

Das Zentrum des Arrays 17 deckt sich mit der Position des Laserstrahles (12a in Fig. 2) des Entfernungsmessers und ist als Koordinatenursprung des Arrays 17 definiert, d.h. seine augenblickliche Position im Bildfeld ist durch die Bildfeldkoordinaten xₙ und yₘ bestimmt. Gleichzeitig werden die lichtelektrischen Wandler 17' von diesem Koordinatenursprung aus linker Hand mit -a, rechter Hand mit +a bezeichnet. In vertikaler Richtung sind die Wandler oberhalb der Mittelposition (Bildelement 28a) mit +b, unterhalb mit -b bezeichnet. Wie aus Fig. 5 hervorgeht, werden die Signale der einzelnen Elemente 17' des Arrays 17 in einen Bildspeicher 32 eingelesen, wobei jedem Pixel 28' des Bildfeldes 28 eine Speicherzelle (32' in Fig. 6) entspricht. Daher werden die Signale der einzelnen Wandler 17' des Arrays 17, wie Fig. 6 zeigt, über eine Adressierstufe 47 in den entsprechenden Pixel-Speicher 32 eingelesen (der auch unten an Hand der Fig. 5 erläutert wird). Obwohl verschiedene Ausbildungen diese Speichers 32 denkbar sind, ist es bevorzugt, wenn jedes Bildelement 28' mindestens einer Speicherzelle 32' des Pixel-Speichers 32 entspricht. Da jedem Bildelement noch Entfernung- und allenfalls andere Daten zuzuornen sind, können dafür entweder gesonderte Speicher (sind synchron auszulesen) oder allen (oder einem Teil davon) gemeinsame Speicher zugeordnet werden.

Wird als Array eine Dioden-Matrix verwendet, bei welcher jede einzelne Diode direkt ausgelesen werden kann, so wird in der gezeigten Position des Bildelementes 28a das Signal der Diode (0,0) des Arrays 17, in eine Speicherzelle 32a mit den Koordinaten (xₙ, yₘ) eingelesen und beispielsweise das der Diode (4,-2) in die Speicherzelle 32b mit den Koordinaten (xₙ₊₄, yₘ₋₂).

Durch die Drehung des Spiegelprismas 8 in die nächste Meßposition verschiebt sich das Dioden-Array 17 in Bezug auf das Bildfeld 28, wobei der Koordinatenursprung des Arrays die Bildfeldkoordinaten xₙ und yₘ₋₁ einnimmt. Sodann wird die Zuordnung der Photowandler 17' zu den Zellen 32' des Speichers 32 durch die Adressierstufe 47 derart um eine Zelle verschoben, daß jene Diode, welche nun die Koordinaten (0, +1) besitzt, das Bildelement 28' aufnimmt, welches zuvor vom Wandler 28a aufgenommen worden ist, als er noch die Koordinaten (0,0) hatte. In die Speicherzelle (xₙ, yₘ) wird nun das Signal der Diode (0,+1) eingelesen, da dieses aus dem gleichen Raumwinkel stammt und dieselbe Information aus dem Objektfeld 28 erhält, wie das der Diode (0,0) bei der vorhergehenden Messung. Analog wird in der Speicherzelle (xₙ₊₄, yₘ₋₂) das Signal der Diode (4, -1) abgespeichert. Die neu eingelesenen Signale werden auf die in der betreffenden Speicherzelle bereits gespeicherten aufaddiert. Der kumulierte Signalpegel in einer Speicherzelle ist daher entsprechend der Zahl der Dioden des Arrays ein Vielfaches der Signalamplitude einer Einzeldiode.

Wird ein CCD-Array eingesetzt, so werden die Ladungen der Zellen einer Zeile in die Zellen der nächsten Zeile verschoben. Diese Verschiebung erfolgt synchron mit der Drehung des Spiegelprismas 8 (zu welchem Zweck die erwähnten Winkeldecoder benutzt werden), so daß die Wandler dieser zweiten Zeile (z.B. unterhalb des zentralen Elementes 28a gelegen) nun wieder mit Licht aus dem gleichen Raumwinkel beleuchtet werden und sich die Signale in den Zellen addieren. Bei Erreichen des Randes des Arrays werden die in den Zellen gespeicherten Signale ausgelesen und in die entsprechenden Speicherzellen des Bildspeichers 32 übertragen.

In der Fig. 3 sind noch zwei weitere Beispiele angedeutet und zwar Ausführungen mit eindimensionalen Arrays, sogen. Zeilen. In der ersten Version 17a ist die Zeile in X-Richtung des Bildfeldes orientiert, wobei das zentrale Element 28a' sich an den Koordinaten (x_{R} und y_{S}) als Ursprung des Koordinatensystems befindet, das von -c3 bis +c3 variiert. In der zweiten Version liegt das Array 17b in Y-Richtung und reicht von + d4 bis -d4, wobei das Zentrum die Koordinaten (x_{U} und y_{V}) hat. Die Wirkungsweise ist analog zu der oben beschriebenen. Grundsätzlich können die Zeilen unter beliebigen Winkeln in Bezug auf das Bildfeld 28 ausgerichtet sein.

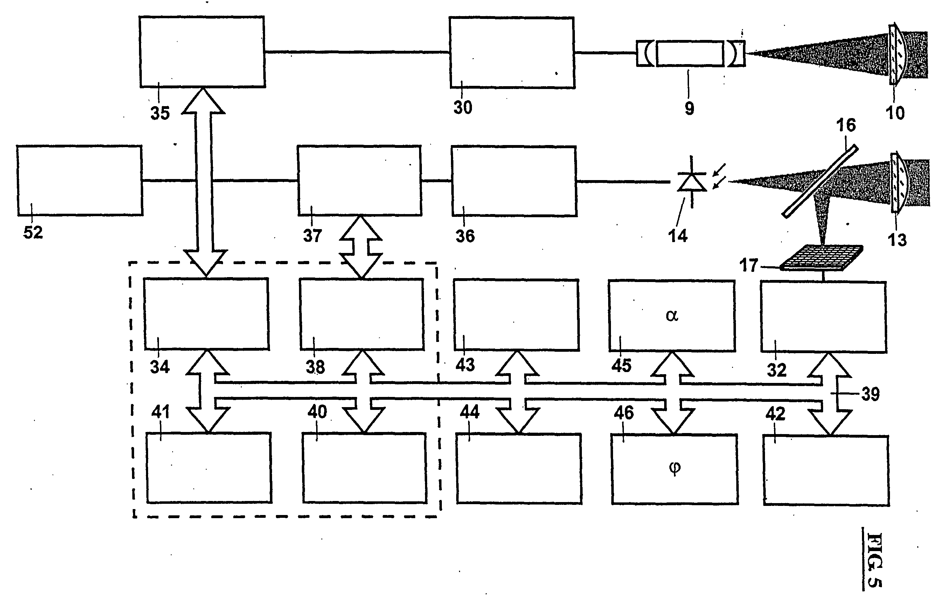

Durch den räumlichen Abstand zwischen dem Laser-Meßstrahl 12a und dem Empfangsstrahl 12b kann es zu einem Versatz zwischen dem Entfernungsbild und dem durch das Array 17 erzeugte passive Bild kommen, wie besonders Fig. 4 zeigt. Diese Parallaxe wirkt sich vor allem im Nahbereich störend auf, ist aber bei weit entfernten Objekten vernachlässigbar. Da für jedes einzelne Bildelement 28' der Entfernungswert bekannt ist (wie später unter Bezugnahme auf Fig. 5 erläutert wird, ist er in einem Speicher 38 gespeichert), kann beispielsweise die Adressierstufe 47 eine entsprechende, entfernungsabhängige Verschiebung bei der Einlesung der Signale aus dem Array 17 in den Bildspeicher 32 diese Parallaxe ausgleichen. Der Parallaxenausgleich kann aber auch bei einer späteren Bildbearbeitung, beispielsweise auch im endgültigen Bildspeicher 43, durchgeführt werden.

In Fig. 4 ist eine Alternative zu der in Fig. 2 gezeigten Scan-Einrichtung gezeigt. Anstelle eines 3-seitigen Spiegel-Prismas wird ein 4-teiliges Spiegel-Prisma 18 eingesetzt. An der Spiegelfläche 18a wird das einfallende Licht zu einem Objektiv 13a umgelenkt. Dieses fokussiert das Licht auf die Empfangsdiode 14 des Laserentfernungsmessers. Die Spiegelfläche 18b reflektiert das einfallende Licht auf ein Objektiv 16b, welches ein Bild eines Teilbereiches des Objektraumes 28 auf das Array 17 (oder 17a oder 17b) entwirft (vgl. Fig. 3). Die Speicherung der Signale erfolgt analog zu Fig. 2, wobei auch hier ein Parallaxenausgleich möglich ist, indem beispielsweise die Adressierstufe 47 in der in Fig. 6 gezeigten Weise mit dem Entfernungsmeßsystem 41, d.h. beispielsweise mit dem Prozessor 34 bzw. dem Speicher 38, verbunden ist.

Die Figur 5 zeigt in Form eines Blockdiagramms schematisch den Aufbau des Steuergerätes 3 des Laser- Scanners gemäß der Erfindung, wobei in diesem Diagramm nur die den (oben in Bezug auf die Fig. 2 und 4 besprochenen) Ablenkeinheiten nachgeschalteten Systeme dargestellt sind. Mit 30 ist ein Laser-Transmitter bezeichnet, der den Laser 9 ansteuert, welcher die Optik 10 vorgeschaltet ist (vgl. auch Fig. 2) und den Laserstrahl im allgemeinen bestmöglich kollimiert. Neben der Sendeoptik 10 ist eine Empfängeroptik 13 vorgesehen, deren optische Achse parallel zu der der Sendeoptik 10 ausgerichtet ist. Im Strahlengang der Empfängeroptik 13 ist ein Teilungsspiegel 16 vorgesehen. Die Empfängeroptik 13 konzentriert die von einem im Strahlengang der Sendeoptik befindlichem Ziel im allgemeinen diffus reflektierte Strahlung auf die Empfangsdiode 14. Mit Vorteil wird als Empfangsdiode 14 eine Avalanche-Diode eingesetzt, obwohl auch andere lichtelektrischen Wandler, etwa Photo-Transistoren, denkbar wären.

Vorzugsweise sind Sendelaser 9 und Empfangsdiode 14 in ihrer spektralen Charakteristik aufeinander abgestimmt, wobei die Empfangsdiode 14 ihre maximale spektrale Empfindlichkeit in dem Bereich aufweist, in welchem der Sendelaser 9 maximal emittiert. Da die Empfangsdiode 14 aber neben der von dem Sendelaser emittierten und vom Ziel reflektierten Strahlung viel Störstrahlung in Form von Tageslicht oder Licht von den verschiedensten Kunstlichtquellen empfängt, kann es vorteilhaft sein, der Empfangsdiode ein möglichst schmalbandiges, optisches Filter vorzusetzen, welches seine maximale Transmission in demjenigen Spektralband aufweist, in welchem der Laser 9 emittiert.

Durch den Teilungsspiegel 16 wird ein Teil des aus dem Objektraumes abgestrahlten Lichtes auf das Photoelemente-Array 17 konzentriert. Vorzugsweise weist der Teilungsspiegel 16 eine dichroitische Verspiegelung auf, welche Strahlung der Wellenlänge des Lasers 9 im wesentlichen ungestört passieren läßt, während kurzwelligere Strahlung, insbesondere sichtbares Licht, zum überwiegenden Teil auf das Array 17 reflektiert wird. Das Array 17 kann anstelle von normalen Photoelementen auch Element-Tripel aufweisen (wie dies im Beispiel der Fig. 6 angedeutet ist, wo ein RGB-Farbsignal verarbeitet wird), deren Einzelelemente in ihrer spektralen Empfindlichkeit auf die drei Grundfarben abgestimmt sind. Mit einer solchen Variante kann daher parallel zum Entfernungsbild (aktiver Kanal) über den zweiten, passiven Kanal anstelle eines monochromen Bildes ein Farbbild des Objektfeldes 28 aufgezeichnet werden.

Der Lasertransmitter 30 umfaßt einen Impulsgenerator, der den Laser 9 ansteuert. Der Lasertransmitter gibt, wenn er vom Prozessor 34 entsprechend angesteuert wird, einen Laserimpuls oder eine Folge von Laserimpulsen, sogenannte Bursts, ab. Ein solcher Burst kann je nach vom Prozessor gegebenen Befehl 1-50 Impulse umfassen. Mittels eines vom Prozessor 34 steuerbarem Verzögerungsgenerators 35 können die einzelnen Impulse eines Bursts in ihrer Phasenlage verändert werden, wobei die Phasenverschiebung periodisch erfolgt. Bezüglich dieser Technik sei auf die WO 99/13356 verwiesen, deren Inhalt hier durch Bezugnahme als geoffenbart gelten soll.

Die von der Diode 14 empfangenen Signale werden in einer Verstärker- und Analog-Signalprozessorstufe 36 verstärkt und bearbeitet. In einer möglichen Ausbildungsform werden die auf diese Weise bearbeiteten Signale in einem Analog-/Digital-Konverter 37 mit einer Sample-Frequenz von beispielsweise 60 MHz digitalisiert. Diese gesampelten Echo-Signale werden in einem Speicher 38 abgelegt. Die Erfindung ist jedoch nicht auf diese Ausführungsform beschränkt, denn es wäre ebenso möglich, die Signale schon for dem Eintritt in den Prozessor 24 zu digitalisieren oder eine vollständig analoge Auswertung vorzunehmen.

Zufolge der Phasenverschiebung der Sendeimpulse eines Bursts gegenüber der Samplefrequenz werden die gesampelten Echosignale in verschiedene Speicherzellen abgelegt. Weist die Phasenverschiebung wie oben ausgeführt eine Periodizität von 5 Impulsen auf, so wird der gesampelte Puls nach 5 Impulsen auf den vorhergehenden aufaddiert. Umfaßt ein Burst z B. 50 Impulse und werden die digitalisierten Impulse mit der Periode 5 "verkämmt", so werden jeweils in einer Speicherzelle 10 Digitalwerte aufaddiert und die Sample-Frequenz von 60 MHz erscheint um die Periodenzahl der Verkämmung vergrößert, in dem vorliegenden Beispiel auf 300 MHz, so daß das Abtasttheorem in Bezug auf den rekonstruierten Empfangsimpuls eingehalten werden kann.

In einer alternativen Ausführungsform wird mittels einer Zeitintervall-Digitalisierungseinrichtung 37 das Laufzeitintervall zwischen Sende- und Empfangsimpuls sowie die Signale der Winkelgeber digitalisiert und die Ergebnisse in einem Speicher 38 abgelegt. Getaktet wird die gesamte Einrichtung durch einen Clock-Generator 52. Der Prozessor 34 und der Datenspeicher 38 sind durch einen Datenbus miteinander verbunden, der schematisch angedeutet und mit 39 bezeichnet ist. An diesen Datenbus 39 sind ferner ein Programmspeicher 40 für den Prozessor 34 angeschlossen, sowie ein Datenzwischenspeicher 41, in welchen nach einer ersten Auswertung durch den Prozessor 34 Rohdaten abgelegt werden, die am Ende des Meßzyklus ausgelesen werden. Aus diesen Rohdaten wird mit im Programmspeicher 40 abgelegten Algorithmen vom Prozessor 34 in einer Endauswertung ein Entfernungswert für jedes einzelne Rasterelement ermittelt. Alternativ bleiben die Rohdaten gespeichert, bis der Benützer die Endauswertung vornehmen will und dies durch eine entsprechende Eingabe (z.B. in den Computer 5) veranlaßt.

Gleichzeitig mit jeder Entfernungsmessung werden die Signale α und ϕ der Winkeldecoder 45, 46 (Fig. 5) erfaßt, die dann zusammen mit dem Entfernungswert einen Punkt (Vertex) der Punktwolke definieren. Die Punktwolke verkörpert den primären Ausgangsdatensatz des Scanners, die Informationen des passiven Kanals und weitere Informationen wie Pulsamplitude, Pulsform und/oder Impulsbreite können als zusätzliche Deskriptoren für die einzelnen Punkte (Vertex) der Punktwolke betrachtet werden.

Die von den einzelnen Elementen 17' des Arrays 17 gelieferten Signale werden, wie bereits anhand der Fig. 3 erläutert worden ist, in den Bildfeld- bzw. Pixel-Speicher 32 eingelesen, wobei die jeweiligen Bildkoordinaten x, y von den Ablenkelektronik-Einheiten α und ϕ bzw. 45 und 46 über den Datenbus 39 zur Verfügung gestellt werden. Das von dem Pixelspeicher 32 gelieferte Bildsignal wird in der Video-Prozessorstufe 42 verstärkt und weiter bearbeitet. Dieser Videoprozessor steht über den Bus 39 mit dem Prozessor 34 und den anderen Blöcken des Systems, insbesondere mit dem digitalen Bildspeicher 43 und dem Video-Interface 44, in Verbindung. Wie oben erwähnt, könnte eine Alternative darin liegen, die Pixelsignale im Speicher gespeichert zu halten und die Übertragung auf den digitalen Bildspeicher erst zu einem späteren Zeitpunkt vorzunehmen. Aber mindestens in der zuerst beschriebenen Ausführung werden die zu den einzelnen Rasterelementen 28' gehörigen Bildkoordinaten von den beiden Ablenkelektronik-Einheiten 45 und 46 über den Datenbus 39 in das System eingespeist.

Die Erfindung ist nicht auf die oben beschriebenen Beispiele beschränkt. So kann z.B. anstelle der digitalen Signalauswertung eine analoge Signalauswertung eingesetzt werden, bei welcher für jedes Bildelement ein einziger Laserpuls verwendet wird, um die Entfernung zu bestimmen. Weiters können anstelle der oben beschriebenen Arrays mit 128 x 128 Elementen bzw. der Zeilen mit 128 Elementen auch hochauflösende Arrays bzw.

Zeilen mit Zeilenlängen > 2000 bzw. > 4 Millionen Pixel eingesetzt werden. Für Sonderanwendungen, z.B. für Überwachungszwecke oder für die Vermessung von Konvertern in der Stahlindustrie, können auch Arrays angewendet werden, die besonders im IR-Bereich sensibilisiert sind. Dies mag deshalb von Interesse sein, weil etwa bei der Raum- oder Gebäudeüberwachung ein Eindringling die IR-Strahlung nicht sieht, bei Konvertern deshalb, weil diese selbst eine gewisse IR Strahlung abgeben, wenn sie bei 800°C bis 1200°C gemessen werden (gegebenenfalls wird dann ein Laser 9 mit einem Wellenbereich außerhalb der Strahlung des Konverters benutzt).

## Patentansprüche

1. Einrichtung zur Aufnahme eines Objektraumes mit einer opto-elektronischen Entfernungsmeßeinrichtung nach einem Signal-Laufzeitverfahren mit einer Sendeeinrichtung zum Aussenden von optischen Signalen, insbesondere denen eines Lasers, und einer Empfangseinrichtung zum Empfangen von optischen Signalen, insbesondere von Laserstrahlung, die von im Zielraum befindlichen Objekten reflektiert wird, ferner mit einer Scan-Einrichtung zur Ablenkung der optischen Achsen von Sende- und Empfangseinrichtung in zwei, vorzugsweise orthogonale Richtungen, femer mit einer Auswerteeinrichtung, die aus der Laufzeit bzw. der Phasenlage des ausgesandten optischen Signals Entfernungswerte ermittelt, wobei ferner ein Empfänger für elektromagnetische Strahlung, insbesondere für sichtbares Licht, mit einer Optik vorgesehen ist, die den Bildwinkel des Empfängers in etwa dem Öffnungswinkel des Sendestrahles der Entfernungsmeßeinrichtung anpaßt, wobei diesem Empfänger eine Scan-Einrichtung zur Ablenkung der optischen Achse in zwei Richtungen vorgeschaltet ist, die mit jenen der Ablenkrichtungen der Scan-Einrichtung der Entfernungsmeßeinrichtung übereinstimmen und den Objektraum synchron und phasengleich abtasten, wobei aus den entsprechenden Signalen Bildelemente ermittelt werden und jedem Bildelement ein Raumwinkel zugeordnet ist, **dadurch gekennzeichnet, daß** als Empfänger für die Bildelemente ein ein- oder zweidimensionales Array (17) vorgesehen ist und die Brennweite der dem Array vorgeschalteten Optik (13 bzw. 13b) so gewählt ist, daß in an sich bekannter Weise der Bildwinkel einer Einzeldiode des Arrays im wesentlichen dem Öffnungswinkel des Sendestrahles (12a) der Entfernungsmeßeinrichtung entspricht und das Array entsprechend den Ablenkrichtungen (α und ϕ) der Scan-Einrichtung (8 bzw. 18 und 1b) ausgerichtet ist und der Ablenkwinkel (α und ϕ) der Scan-Einrichtung (8 bzw. 18 und 1b) zwischen zwei aufeinanderfolgenden Messungen vorzugsweise der Teilung des Arrays (17) entspricht, ferner mit einem Speicher (32), der pro Bildelement mindestens eine Zelle aufweist, wobei im wesentlichen gleichzeitig mit jeder Entfernungs-Einzelmessung die einzelnen Elemente des Arrays (17) auslesbar und die Signale derselben in Zellen des Speichers (32) speicherbar sind, die den Elementen des Bildes des Objektraumes zugeordnet sind und mit jeder Entfernungs-Einzelmessung die Zuordnung der Elemente des Arrays (17) und der Zellen des Speichers (32) um eine Teilung verschiebbar ist, so daß sich die aus den jeweiligen Raumwinkeln empfangenen Helligkeits- bzw. Farb-Signale während aufeinanderfolgenden Messungen in den einzelnen Zellen aufaddieren.

2. Einrichtung zur Aufnahme eines Objektraumes nach Patentanspruch 1 **dadurch gekennzeichnet, daß** die Scaneinrichtung (8 bzw. 18 und 1b) für den Empfänger (17) für elektromagnetische Strahlung in an sich bekannter Weise ident ist mit der der Entfernungsmeßeinrichtung und daß im Strahlengang desselben ein optischer Strahlenteiler (16) vorgesehen ist, der einen Teil der einfallenden Strahlung (12b) dem Empfänger (17) zuleitet.

3. Einrichtung nach Patentanspruch 1 oder 2, **dadurch gekennzeichnet, daß** die Scan-Einrichtung der Entfernungsmeßeinrichtung ein Prisma (18) mit mindestens vier verspiegelte Prismenflächen umfaßt und die optischen Achsen der Entfernungmeßeinrichtung und des Empfängers (17) für die elektromagnetische Strahlung von verschiedenen, vorzugsweise benachbarten, Prismenflächen (18a, 18b) ablenkbar sind.

4. Einrichtung nach einem der Patentansprüche 1 bis 3, **dadurch gekennzeichnet, daß** zur Kompensation einer allfälligen Parallaxe zwischen der Entfernungsmeßeinrichtung und dem Empfänger (17) für die elektromagnetische Strahlung, die Zuordnung zwischen den einzelnen Elemente des Arrays (17) und den Zellen der Speichers (32) entsprechend den gemessenen, zugehörigen Entfernungswerten veränderbar sind.

5. Einrichtung nach einem der Patentansprüche 1 bis 3, **dadurch gekennzeichnet, daß** zur Kompensation einer allfälligen Parallaxe zwischen der Entfernungsmeßeinrichtung und dem Empfänger (17) für die elektromagnetische Strahlung, bei der Nachbearbeitung von Entfernungs- und Helligkeits- bzw. Farbbild die Zuordnung der Elemente der beiden Bilder entsprechend den gemessenen, zugehörigen Entfernungswerten veränderbar ist.

6. Einrichtung nach einem der Patentansprüche 1 bis 5, **dadurch gekennzeichnet, daß** bei Verwendung eines 2-dimensionalen Dioden-Arrays (17) nach vollständiger Abtastung einer Zeile, die in den Zellen des Arrays (17) gespeicherten Signale in die benachbarte Zeile verschiebbar und auf eventuell dort bereits gespeicherte Signale aufaddierbar sind.

7. Einrichtung nach einem der Patentansprüche 1 bis 6, **dadurch gekennzeichnet, daß** zum Verschieben von Zellen- bzw. Elementeninhalten eine Adressierstufe (47) vorgesehen ist.
